(19) **Europäisches Patentamt**

**European Patent Office**

**Office européen des brevets**

(11) **EP 1 542 845 B1**

(12) **EUROPEAN PATENT SPECIFICATION**

(45) Date of publication and mention
of the grant of the patent:
**13.12.2006 Bulletin 2006/50**

(51) Int Cl.:
*B29C 44/12* (2006.01)     *B29C 70/66* (2006.01)
*B29C 70/08* (2006.01)     *B32B 5/18* (2006.01)
*B32B 5/26* (2006.01)

(21) Application number: **03748797.2**

(22) Date of filing: **29.09.2003**

(86) International application number:
**PCT/NL2003/000667**

(87) International publication number:
**WO 2004/028776 (08.04.2004 Gazette 2004/15)**

(54) **CORE MATERIAL**

KERNMATERIAL

MATÉRIAU POUR NOYAUX

(84) Designated Contracting States:
**AT BE BG CH CY CZ DE DK EE ES FI FR GB GR
HU IE IT LI LU MC NL PT RO SE SI SK TR**

(30) Priority: **27.09.2002 EP 02079014**

(43) Date of publication of application:
**22.06.2005 Bulletin 2005/25**

(73) Proprietor: **Lantor B.V.
3901 RG Veenendaal (NL)**

(72) Inventors:
• **LAMERS, Peter, Hubertus
NL-3904 PW Veenendaal (NL)**

• **ANJEMA, Pieter
NL-3904 HL Veenendaal (NL)**

(74) Representative: **Winckels, Johannes Hubertus F.
et al
Vereenigde,
Johan de Wittlaan 7
2517 JR Den Haag (NL)**

(56) References cited:
**EP-A- 1 010 793          US-A- 4 747 346**

**Description**

The invention relates to a core material for use in the production of fibre reinforced plastics materials, more in particular suitable for application in closed mould systems, spray up applications and/or hand-lay up applications.

Plastics reinforced with fibrous webs, are often used for manufacturing shaped articles such as automotive or industrial parts, e.g. tanks, bath tubs, road signs, cladding panels, boats, caravans, etc.

Fibrous webs are suitable as a reinforcement for all kinds of cured synthetic plastics materials, such as polyester resin or epoxy resin. Generally, the incorporation of a fibrous web in a resin material results in increased strength, stiffness, fatigue life, fracture toughness, environmental resistance, increased temperature stability, reduced weight and reduced manufacturing cost of said resin material.

Use of core materials in fibre reinforced plastics has already been known for decades. The aim thereof is on the one hand to decrease the amount of resin required, resulting in cost and weight savings, and on the other hand to improve some mechanical properties of the material, more in particular the bending stiffness.

US-A-3,676,288 discloses non-expanded micro-spheres which are applied to or incorporated in a fibrous web by means of a binder, for example, a polyacrylonitrile latex. As the binder is dried and cross-linked, the spheres are attached to the fibrous web and expanded.

EP-A- 0 190 788 is directed to the use of a fibrous web, incorporating micro-spheres, for the manufacture of objects reinforced with such a fibrous web. According to said patent application, the micro-spheres are mainly contained within the web and arranged in a pattern in which areas of the web, which contain micro-spheres, are separated from each other by areas which contain virtually no micro-spheres.

In the production of fibre reinforced plastics materials two prominent methods are available, one being based on the manual impregnation of the fibre materials (hand lay-up; spray-up) and another being based on the use of closed moulds. In the latter system - which is usually automated - the fibre reinforcing material is placed in a mould, which is closed and subsequently filled with resin. An important advantage of these closed mould systems resides inter alia in the reproducibility of the properties of the product (better tolerances), in environmental considerations, in enhanced surface properties and in enhanced mechanical properties. It is also possible to apply higher fibre volume fractions.

Use of the above described core materials in closed mould systems have for a long time given rise to difficulties in reconciling the various requirements to be met by a core material for use therein. These properties are inter alia.

- good compression resistance,
- fast flow of resin through the core material in all directions,
- low resin uptake,
- decreased shrink (i.e. compensate for resin shrinkage), and
- good drapability (i.e. low bending stiffness).

In particular the first two requirements have been very difficult to reconcile for a long time. It will be clear, that the open structure that is necessary for obtaining a good resin flow in the plane of the core material, will tend to be at the expense of the compression-resistance. Further, a low resin uptake, which can be obtained by a large volume of foam in the web, will be incompatible with the good flow of resin. Also the drapability characteristics are not easily compatible with the compression resistance and the low resin uptake. In order to address these requirements a core material has been developed as is disclosed in EP 1 010 793 and the preamble of claim 1. In a preferred embodiment of this publication, the core material contains micro-spheres distributed over the core material in a regular pattern.

It has however been found that the surface quality of these prior art materials, such as the material disclosed in EP 1 010 793 is not always satisfactory, in particular not with respect to the visual appreciation of the surface (in particular with respect to the occurrence of a print-through effect) or surface finish. Such visual appreciation or surface finish can for example be important in shaped articles such as panels for cars, trucks, etc. Methods to assess the visual appreciation include panel tests.

It is also possible to assess a quantitative indication of the surface finish by diffraction measurement of the surface. The orange peel value of the surface is for example a suitable parameter to this purpose. Instruments to measure the orange peel value are known in the art and are commercially available, e.g. instruments using the D-Sight technique, developed by Diffracto Ltd (Canada). This technique is discussed in Reynolds et al. "Theory and applications of a surface inspection technique using double-pass retroreflection", Optical Engineering, Vol 32, No 9, pp. 2122-2129, 1993 and in J.H. Heida and A.J.A. Bruinsma; "D-Sight Technique for Rapid Impact Damage Detection on Composite Aircraft Structures"; Presented at: the 7th European Conference on Non-Destructive Testing in Copenhagen, 26-29 May 1998; available at NDT.net - June 1999, Vol. 4 No. 6, US-A 4,863,268, US-A 5,075,661.

Accordingly, it is an object of the present invention to provide a new core material, which can be used as an alternative to known core materials, in particular for the manufacture of shaped objects wherein the visual appreciation of the surface is relevant. More in particular it is an object to provide such a core material wherein the material is suitable for use in closed mould systems, spray up applications, and/or hand lay-up applications.

In a particular aspect, an object of the invention is to provide a core material which may be used in the manufacture of a shaped article - typically involving the impregnation of the core material with a resin - with an improved orange peel.

More in particular, it is an object to provide a core material which is suitable to be used in the manufacture of a shaped article to obtain a shaped article having an orange peel value as defined herein of less than 30.

It has been found that one or more of these objects can be realised by a core material - which is in general drapable and preferably has a high compression resistance - which core material contains members of relatively dense material and channels, being open. Namely, in accordance with the invention, the members and channels have specific dimension, namely having relatively small members and relatively small channels.

Accordingly, the present invention relates to a core material, in particular a core material suitable for use in closed mould systems, spray-up applications and/or hand-lay up applications, said core material in general being drapable - and preferably having a compression-resistance of more than 30 % at 1 bar pressure - wherein the core material is based on at least one fibrous web containing a foam-structure within the web, said foam-structure being formed of a plurality of members, which members are separated from each other by channels that are permeable to resin, wherein the members have an average diameter - as defined by the diameter of the enveloping circle, in the plane of the material - of less than 1.5 mm, preferably of 0.2-1 mm, and wherein the channels have an average diameter of less than 0.75 mm, preferably of 0.3-0.5 mm.

Such a core material has been found very suitable for improving surface quality and/or improving the visual appreciation, preferably with respect to reducing the print-through effect, in laminate. More in particular, it has been found that such a core material is very suitable for providing a shaped article having an orange peel value of less than 30.

For practical reasons the average diameter of the members will typically be at least 0.5 mm.

The members and channels may be distributed in a more or less regular way, e.g. with a pattern repeat of less than 1 cm, more in particular of less than 0.5 cm, or in an irregular way as defined below.

For the other parameters, in particular permeability, nature of the materials of which the core material is made, shape of the members, free volume of the web, the conditions as described below apply.

Preferably, in the core material the members are irregularly distributed within or upon the web.

The core material of the invention has been found very suitable for improving surface quality and/or improving the visual appreciation, preferably with respect to reducing the print-through effect, in laminate. More in particular, it has been found that such a core material is very suitable for providing a shaped article having an orange peel value of less than 30.

For the other parameters, in particular permeability, nature of the materials of which the core material is made, shape of the members, free volume of the web, the conditions as described below apply.

It has been found that a core material according to the invention maintains a very good drapability, compression resistance and a suitable permeability, even in case of an irregular distribution of members, whilst the surface quality, in particular with respect to the visual appreciation is improved in comparison to known materials, e.g. a core material provided with a regular pattern of hexagons, such as Soric®, wherein a print-through effect, at the areas between the members (i.c. hexagons) may be clearly visible, after impregnation with the resin and drying. It has been found that such a print through does not occur or at least to a lesser extent with a core material according to the present invention.

Further it has been found that a core material according to the present invention has an improved drapability and/or permeability in comparison to commercially available core materials.

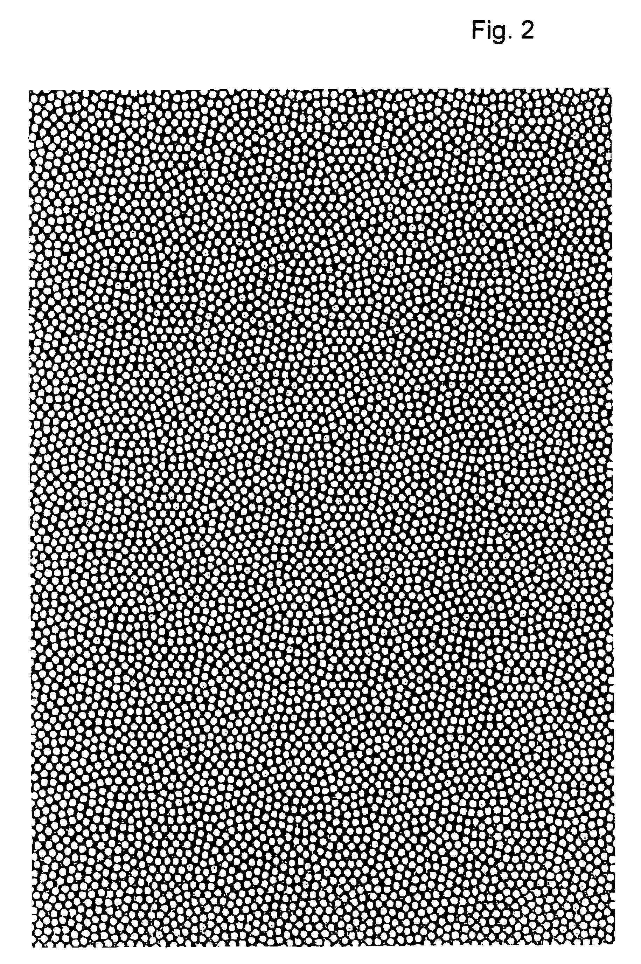

Figures 1 and 2 show examples of how the members (the light areas) can be distributed over the core material. The dark areas represent the channels. These channels provide by and large the permeability in a core material represented by Figure 1 or 2.

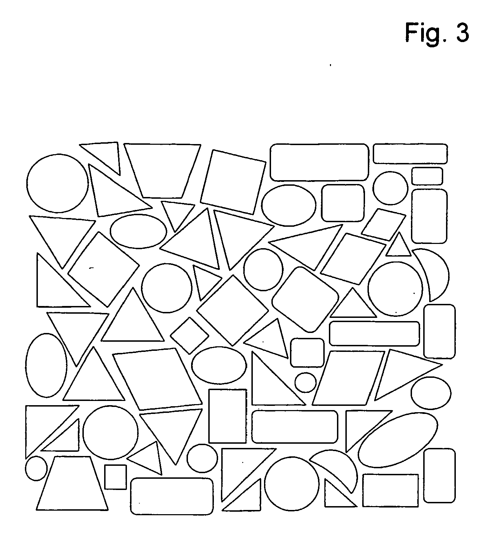

Figure 3 shows an schematic example of a core material containing a plurality of differently shaped members

Figure 4a shows a photograph of a commercially available core material (Soric ®, with 6 mm hexagons) used in the comparison example.

Figure 4b shows a photograph of a core material according to the invention used in Example 1.

Figure 4c shows another core material according to the invention.

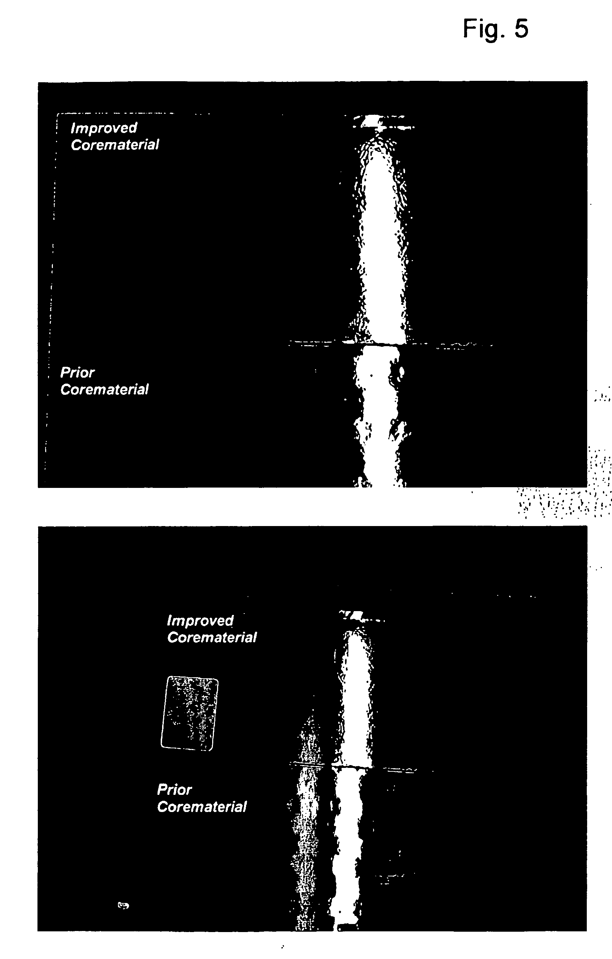

Figure 5 shows two photographs comparing a composite comprising a core material according to the invention and a composite comprising a Soric® core material (each photographs shows the same two composites, but photographs were taken from a different angle). The material according to the invention clearly has a more uniform visual appearance. This is further accentuated by the light bar in the central section of the plate, which is the reflection of the light of a common fluorescent tube. The distorted shape of the reflection in the prior art material compared to the material according to the invention is a striking illustration of the visual improvement, due to use of the new core material.

Figure 6 is a composite according to the invention, wherein a core material was used with a permeability of about $1.5 \times 10^{-9}$ m$^2$. There is no print-through effect visible at all, making this composite very highly visually appreciated.

Figure 7 shows the diffraction pattern obtained by a D-Sight system of a composite based upon Soric® core material formed of 6 mm hexagons. The inserted rectangle in the lower middle section of the figure shows a representation at higher resolution.

Figure 8 shows the diffraction pattern obtained by a D-SIGHT system of a composite based upon Soric® core material formed of 3.5 mm hexagons.

Figure 9 shows the diffraction pattern obtained by a D-SIGHT system of a composite based upon a core material according to the invention (the core material having a pattern as shown in Figure 1, 1:1 scale).

An irregular distribution as used herein can be defined by its pattern repeat. The pattern repeat can be represented by the length (when determined in one direction) or area forming a pattern that is repeated in a different part of the material. Good results have been achieved with an irregular distribution, characterised in that in at least in one direction of the x-direction and the y-direction and preferably in both the x-direction and the y-direction, the pattern repeat of the pattern of members is at least 0.5 cm, preferably at least 1 cm. The upper limit is not critical. For practical reasons, the upper limit may be determined based upon the technique by which the core material is made. For example, screen-printing is a very suitable technique to make a core material. The upper limit of the pattern repeat, will then in general by determined by the circumference and/or width of the screen. For example, screens with a circumference of up to about 92.5 cm are commonly used. In practice the upper limit will generally be about 140 cm.

It is also possible to determine the pattern repeat based upon the number of members forming a repeating pattern. Good results have been achieved with an irregular distribution, wherein in at least in one direction of the x-direction and the y-direction no repetition occurs in any pattern formed by at least 10 adjacent members and preferably in any pattern formed by at least 25 adjacent members. More preferably no repetition is visible in any members pattern in an area formed by at least 100 adjacent members.

The irregular distribution is preferably mainly a random distribution, i.e. a distribution wherein no repetition of pattern of the members occurs within the plane of the core material. A core material with a random distribution has been found to be very suitable for manufacturing a shaped article with a very high surface quality, in particular with respect to the visual appreciation.

The orange peel value or D-Sight index as defined herein is measurable by the D-Sight technique (e.g. on a D-SIGHT system, supplied by Diffracto Ltd., Canada), see also above. Suitable conditions are specified in the Examples, wherein the core material provided with a fibrous glass fleece (such as chopped strand mat, CSM 450 g/m$^2$ supplied by Owens-corning) at both sides and a Gelcoat™ (supplied by De IJssel, the Netherlands) surface finish. For comparative reasons it is noted that a full glass material consisting of three layers of the fibrous glass fleece gives rise to an orange peel value of about 25 in this methodology and use of a conventional core material (Soric®) a value of about 55.

Depending upon its intended use, in particular with respect to the need of a resin to be able to penetrate into the core material within a particular time-span, the permeability for resin of a core material according to the invention can be chosen in a wide range. Particularly good results have been obtained with a core material having a permeability in the plane of the material for resin of at least 1 x 10$^{-9}$ m$^2$. In such a material the flow properties of the resin have been found to be very satisfactory. For even better flow properties, the permeability is preferably at least 1.5 x 10$^{-9}$ m$^2$, more preferably at least more than 5 x 10$^{-9}$ m$^2$.

The permeability is largely provided by the channels, formed by the areas containing no members. The permeability (k) is defined herein according to the law of Darcy for steady flow as $q = \dfrac{k.\dot{A}}{\eta} . \dfrac{\Delta p}{\Delta x}$, wherein q is the resin flow in m$^3$/s, A is the total surface of the cross section through which the resin flows in m$^2$, η is the viscosity of the resin in Ns/m$^2$, $\Delta$p is the pressure difference in N/m$^2$ and $\Delta$x is the distance over which the pressure difference exists and the resin flows in m. The permeability is defined in the plane of the material, that is not perpendicular to the material, but parallel to the upper and lower surface thereof.

The drapability is defined herein as the ability of the core material to conform to a contoured surface, in particular a mould. In particular a core material as defined herein is drapable, if it can be bent around a corner with a radius of 10 mm or less, without substantial irreversible deformation of the core material. This allows the material to be draped in a good way in the mould, thus enabling the production of smoothly shaped products.

Although the above defined drapability is in general sufficient for use in close systems, it is an advantage that the present invention provides a core material with a much better drapability, such as a drapability that allows bending around a corner with a radius of only 5 mm or less.

The compression resistance is defined herein as the ability to resist a force that tends to crush or buckle. It is measured by determining the height of the material before applying a pressure and during applying 1 bar pressure perpendicular to the plane of the material. The compression resistance is calculated as 100 % x (height of the material at 1 bar pressure)/height of the material at no pressure).

The compression resistance may be chosen in a wide range, depending upon the type of application and the desired properties. Good results have inter alia been achieved with a core material having a compression resistance of at least 40 % at 1 bar pressure. Especially in case the core material should be suitable for a closed mould system, it is highly preferred that the compression resistance is at least 60 % at 1 bar pressure, even more preferably about 70 % or more at 1 bar pressure. Such a resistance has been found highly advantageous because of a very low tendency of the channels being pressed together, and thus compromising the entry of resin into the channels when being processed in a closed mould. Accordingly, a core material having a compression-resistance of respectively more than 75 %, at least 80 %, at least 90 % or at least 95 % at 1 bar pressure is highly preferred.

Nonetheless, under some circumstances one may opt for a core material having a relatively low compression resistance, e.g. of about 50 % or less.

In particular in case of a core material suitable for a hand lay up or a spray up system, a relatively low compression-resistance in principle suffices, in particular a compression-resistance of 30 % at 1 bar or more.

The present invention combines the careful balancing of the properties of the various components, fibres, binder, foam structure and the like to obtain a suitable balance between properties such as compression-resistance, drapability and permeability in the core material on the one hand and to obtain a high surface quality in a shaped article formed with such a core material on the other hand. Suitable conditions can be determined by the skilled professional by routine considerations and upon the information disclosed herein and in the cited references

If a good surface quality is important but there is also a desire to limit the use of resin and/or the weight of the final composite one may choose to use a material for the members with relatively light material, e.g. a microsphere foam structure; a material with relatively large members, e.g. in the range of 1-3 mm; a material with relatively narrow channels between the members, e.g. of less than 1 mm; and/or a relatively low free volume, e.g. in the range of 40-60 vol %.

If the surface quality is of the utmost importance and savings in weight or cost are of lesser importance, one may to choose a core material with relatively small members, e.g. in the range of 0.5-2 mm (in case of a core material wherein the pattern is not irregular: 0.5-1.5 mm), a high degree of irregularity of the member pattern and/or a resin with a low tendency to shrink after curing, e.g. an epoxy resin.

If drapability and surface quality should be relatively high, one may choose to use relatively wide channels, e.g. with an average diameter of 0.5-2 mm (in case of a core material wherein the pattern is not irregular: 0.5-0.75 mm), in combination with relatively small members, e.g. with an average diameter of less than 1 mm, a high degree of irregularity and/or a relatively flexible fibre material, e.g comprising polyester fibres and acrylate binder.

The members form 'isles' within or upon the web, which members are at least largely surrounded by channels, through which channels resin can flow. The channels are largely free of web material or fibres, although some fibre material may be present to provide sufficient consistency of the core material. As a rule the material content in the channels should be low enough to allow a sufficient permeability to allow sufficient penetration of resin, preferably it should allow a permeability of at least $1 \times 10^{-9}$ $m^2$.

The members are typically made of a closed cell foam structure, e.g. from a material that is usable as a binder material as disclosed herein. The members can also comprise micro-spheres or being formed thereof. These microspheres will be discussed below.

The members largely contribute to the compression resistance of the core material and are in general substantially impenetrable to the resin. The members in any case have a permeability of substantially less than $1 \times 10^{-9}$ $m^2$.

The members can have any shape. Good results have been achieved with a core-material wherein at least the majority of the members are selected from the group consisting of members with circular, ellipsoidal and polygonal cross-sections parallel to the plane of the material. Of course combinations thereof may be employed. Preferred members with polygonal cross-sections are members with triangular, tetragonal, pentagonal, hexagonal, heptagonal or octagonal cross-sections.

The irregular distribution may be obtained by using more or less uniformly shaped members, with the same or different dimensions. Good results have for example been achieved with a core material wherein at least the majority and preferably substantially all members have a circular or ellipsoidal cross-section parallel to the plane of the material.

The irregular distribution may be obtained by using a variety of differently shaped members. Good results have been achieved with a core material wherein at least the majority and preferably substantially all members have a polygonal cross-section parallel to the plane of the material. The differently shaped members in such a core-material are preferably selected from the group of triangles, tetragons, pentagons and hexagons.

It has been found that particularly good results with respect to surface quality are obtained with a core material having an irregular pattern wherein at least the majority of the members and preferably substantially all members have a diameter, as defined by the diameter of the enveloping circle, in the plane of the material of less than 1.5 mm. Very good results have been obtained with a core material wherein at least the majority of the members have a diameter of 0.2 - 1 mm.

The lower limit of the diameter of the members is not particularly critical. For typical applications, at least the majority of the members will have a minimum diameter of at least about 0.2 mm. For practical reasons the diameter will generally be at least about 0.5 mm. Factors, other than the surface quality, to which the diameter of the members may be relevant is the extent to which one wishes to restrict the use of resin in a closed mould system.

Preferably at least the majority of the channels between members have an average diameter of less than 2 mm (in case of an irregular pattern), more preferably of less than 1 mm (in case of an irregular pattern), even more preferably of less than 0.5 mm. The lower limit of the channels is not particularly critical, as long as the permeability remains high enough, as defined herein. A suitable lower limit can routinely be determined by the skilled professional, depending upon the resin and moulding conditions. Typically the majority of the channels will have a minimum average diameter of at least 0.3 mm. Advantages of using a relatively high diameter, e.g. 0.5 to 2 mm (0.5-0.75 in case the core material does not have an irregular pattern) may be a fast flow of resin through the material and a relatively high drapability. Advantages of a relatively low diameter, e.g. in the range of 0.3 to 0.5 mm may include relatively low resin uptake and a higher surface quality.

The thickness of the core material can be varied within wide ranges, e.g. between 1 and 4 mm, preferably between 1.5 and 3 mm, although thicker or thinner core materials can be made in accordance with the invention. The members usually at least extent to the majority of the thickness of the material.

Preferably the fibrous web containing a foam structure has a free volume of less than 80 vol.%, more preferably of 50-70 % by volume. In this respect the free volume is understood to mean the volume of the material that can be accessed by resin. The remainder of the volume will be formed by the members (and some fibres).

A preferred web comprises at least 20 wt.% of fibres, up to 80 wt.% of binder material, which is optionally foamed. The closed cell foam structure forming the members can be prepared from (optionally expandable) micro-spheres which are introduced into the web using an optionally foamed binder material.

Good results have been obtained with a core material containing micro-spheres having an activation temperature of at least 120°C, wherein the free volume in the web is at most 80 vol.%. The web may be mechanically, physically or chemically bonded.

Much preferred is a core material comprising at least 30 wt.% of fibres, up to 70 wt.% binder material, optionally also containing expandable micro-spheres. In practice the amount of expandable micro-spheres will generally be less than 15 wt. %, preferably 1-10 wt % based upon the total weight of the core material.

Preferably the micro-spheres are expandable and more preferably they have an activation temperature of at least 120°C.

Very good results have been achieved with a core material wherein expanded thermoplastic micro-spheres, e.g. of a thermoplastic polymer based on an alkylmethacrylate, such as methyl methacrylate, acetonitril (such as polyacetonitril (PAN)), vinilydene chloride or a combination thereof, are present in the web, said micro-spheres having an initial expansion temperature below the curing temperature of the binder. Micro-spheres are commercially available, e.g. Expancel™ by AKZO-NOBEL.

The core material of the invention may be prepared using techniques known for producing the prior art core materials for the manual production of fibre reinforced plastic materials. The preparation may for example be based upon the methodology as described in EP 1 010 793. Preferably the material is made by rotary screen printing.

In a preferred method to produce a core material, expandable micro-spheres are introduced into a fibrous web, using a binder material, followed by expanding the micro-spheres and curing the binder. In a much preferred method the micro-spheres start to expand at a temperature below the curing temperature of the binder material.

The core material may suitably be prepared in a method wherein a non-woven is printed with a foam or an unfoamed binder, also containing expanded micro-spheres, such as polymeric, glass or ceramic micro-spheres.

In the case of use of expandable micro-spheres, it is preferred to use the following process. First a dispersion of expandable micro-spheres in a binder material is prepared, which dispersion is optionally foamed. The initial expansion temperature of the micro-spheres is preferably below the curing temperature of the binder material. Subsequently, the non-woven, having a thickness less than the required final thickness, is screen printed with the dispersion. Following this, the material is dried and heated to the expansion temperature of the micro-spheres. Upon expansion the temperature is further raised with the result that the binder material cures and sets the micro-spheres in the web. In this way a core material according to the invention can be prepared.

The initial expansion temperature of the micro-spheres is preferably between 120 and 190°C. The curing temperature of the binder is preferably above 170°C.

The fibrous web to be used according to the invention will usually be a non-woven, which may be reinforced, based on conventional fibres. The manufacture of suitable non-wovens has for instance been described by Dr. H. Jörder, "Textilien auf Vliesbasis" (D.V.R. Fachbuch, P. Kepper Verlag). It is also possible to use a combination of a non-woven fibrous web with a reinforcing fabric, one within or on top of the other.

The fibres of the web are preferably selected from the group of natural fibres, glass fibres, metal fibres, ceramic fibres or synthetic fibres, such as acrylic, polyethylene, polypropylene, polyester, polyamide (aramide), carbon or polypropylene fibres and combinations thereof. More preferably the fibres are selected from the group of glass fibres, polyester fibres, polyester-polyethylene bicomponent fibres and combinations thereof. Very good results have been achieved with polyester fibres. Polyester fibres have been found to have very good adherence with the resin and tend to have a favourably low moisture content.

According to a very convenient method, the non-woven is based on a combination of polyester fibres and polyethylene-polyester bicomponent fibres (or other low temperature melting fibres or powders). These types of webs have been thermally bonded by the bicomponent fibres. By heating the web to the initial expansion temperature of the micro-spheres, which is above the melting point of the polyethylene bond, the web becomes loose and will expand easily. After expansion, and curing the final material again has its good bond, resulting in the advantageous combination of properties of the invention. At the same time the web is very easy to handle at the initial stages of the process, thanks to the thermal bonding.

The micro-spheres that may be provided in a fibrous web according to the invention preferably at least consist of a thermoplastic synthetic resin material that is solid at room temperature. Examples of suitable resins include polystyrene, styrene copolymers, polyvinyl chloride, vinyl chloride copolymers, vinylidene chloride copolymers and so forth.

In expandable micro-spheres, usually a blowing agent has been incorporated. The presence of this blowing agent is responsible for an expansion of the micro-spheres when a fibrous web, comprising the micro-spheres, is cured. Thus, the micro-spheres are pressed into the fibrous web in unexpanded form, for example by means of a paste, such as a foam paste. The blowing agent may be a chemical or physical blowing agent, such as azodicarbonamide, isobutane, isopentane, pentane, freon, iso-octane etcetera.

The micro-spheres advantageously have a diameter of 4-20 $\mu$m in unexpanded state, and a diameter of preferably 10-100 $\mu$m in expanded state. After expansion of the micro-spheres, the amount thereof in the web is in general 10 to 60 vol.%. This amount depends on the amount of micro-spheres used and the degree of expansion thereof.

Suitable binders in this regard are for instance lower alkyl acrylate polymer, styrene-butadiene rubber, acrylonitrile polymer, polyurethane, epoxy resins, polyvinyl chloride, polyvinylidene chloride, and copolymers of vinylidene chloride with other monomers, polyvinyl acetate, partially hydrolyzed polyvinyl acetate, polyvinyl alcohol, polyvinyl pyrrolidone, polyester resins, and so forth. Optionally these binders can be provided with acidic groups, for example by carboxylating the binders. A suitable carboxylating agent is, for example, maleic anhydride. In addition, the binder, paste-like composition optionally contains water, surfactants, foam stabilizers, fillers and or thickeners, as has been described in EP-A-0 190 788.

The present invention further relates to a laminate at least consisting of a core material according to the invention, laminated with at least one fibrous fleece. The laminate may be formed in any way, and preferably by stitching or gluing the at least one fleece to one or both sides of the core material. Suitable methods of forming the laminate are known in the art.

An advantage of providing a laminate is the ease of use. A laminate allows easy placement of the combination of core material and fleeces in one step. Thus the manufacturer of a composite does not have to staple different layers (e.g. respectively bottom fleece, core material, top fleece) into the mould in separate steps.

In principle any fibrous fleece suitable for preparing a composite can be used. Preferred fibrous fleeces include glass fibre fleeces, carbon fibre fleeces, polyaramide fibre fleeces and hybrids thereof, e.g. glass-carbon fibre fleeces, glass-polyaramide fibre fleeces or carbon-polyaramide fibre fleeces.

A core material according to the invention has inter alia been found very suitable to make thin laminates, whilst obtaining a surface with a highly desirable smooth appearance. For example a laminate according to the invention may very suitably have a total thickness of 2 to 10 mm, preferably of 3 to 6 mm. Good results have inter alia been realised with a laminate of a core material with a thickness of 1-2 mm covered at both sides with a fleece, preferably a glass fleece, with a thickness of approximately 0.4-0.8 mm, e.g. a glass fleece of approx. 225-600 g/m$^2$, typically about 450 g/m$^2$. Thus a laminate can be obtained with a thickness of about 2-3 mm, which laminate has been found to have a very good surface quality after being cured with a resin, in particular with an epoxy resin.

The invention also encompasses a method for manufacturing a shaped article, wherein a fibrous web as described hereinabove is impregnated with a liquid resin and a hardener there for.

Suitable liquid resins for impregnating a fibrous web according to the invention are any synthetic plastic materials that can be applied in liquid form and be cured. Examples are polyester resins, phenylester resins, polyurethane resins, phenol resins, melamine formaldehyde resins and epoxy resins. Given the specifications of a shaped article to be manufactured, a skilled artisan will be able to suitably select an appropriate resin.

Suitable hardeners for use in a method according to the invention are any hardeners which can be used to cure the chosen liquid resin. These systems are known to the skilled person. It belongs to the standard knowledge of the person skilled in the art to be able to combine resin and hardener so as to obtain optimum results.

The present invention further relates to a shaped article based upon a core material according to the invention, in particular a shaped article obtainable by a method according to the invention wherein a core material according to the invention is impregnated with a resin and cured. In particular, the present invention relates to such a shaped article having a orange peel value or D-Sight index of less than 30, preferably less than 25, more preferably of 10-20, as determined by the D-Sight technique (e.g. on a D-SIGHT system, supplied by Diffracto Ltd., Canada), using the conditions as specified in the Examples.

The invention will now be elucidated by the following, non-restrictive examples.

*Comparison example*

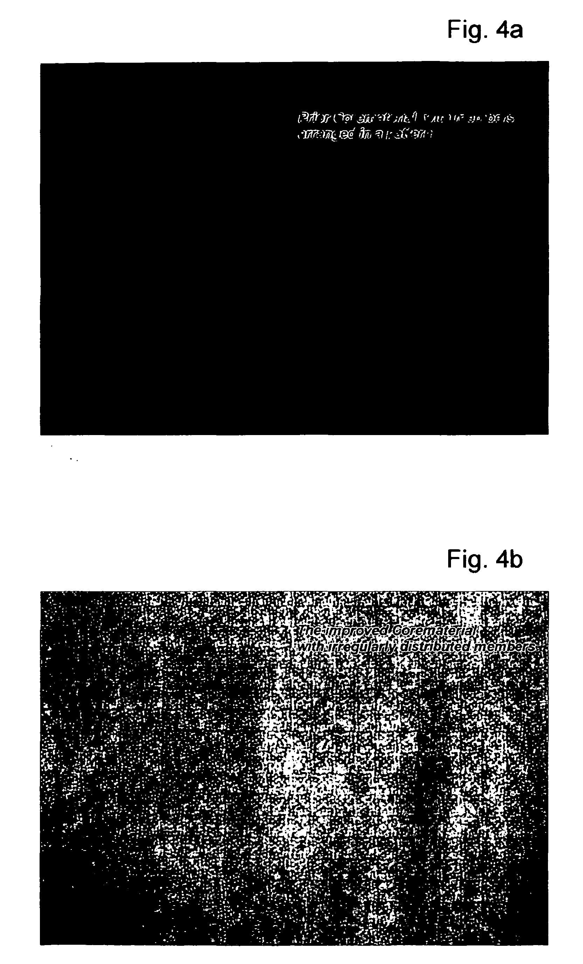

Soric ® core material (Lantor, Veenendaal, the Netherlands) as shown in Figure 4a with hexagon members having a diameter of approximately 6 mm, a permeability of 5 x $10^{-9}$ $m^2$ was sandwiched between two layers of fibrous glass fleece (chopped strand mat) (material weight: 450 $g/m^2$ ; supplied by Owens-Corning). This laminate was impregnated with polyester resin (Synolite 6811-N-1, DSM resins) in a closed mould system by vacuum injection at a pressure of 0.2 bara.

To one side of the mould a surface finish (black Gelcoat™ yt 701; from De IJssel) of about 0.5 mm was applied.

Figure 5 shows the appearance of the composite (marked as "prior core material"). The orange peel value/D-sight index of the surface was determined using a D-SIGHT system with the following parameter settings:

| | |
|---|---|
| Camera angle: | 30 °, Camera height: 570 |
| Application point: | "red"line |
| Fragment size: | Top left corner: x=115, y=271 |
| | Bottom right corner: x=385, y=386 |

WDI 28X24

Block size 10X5

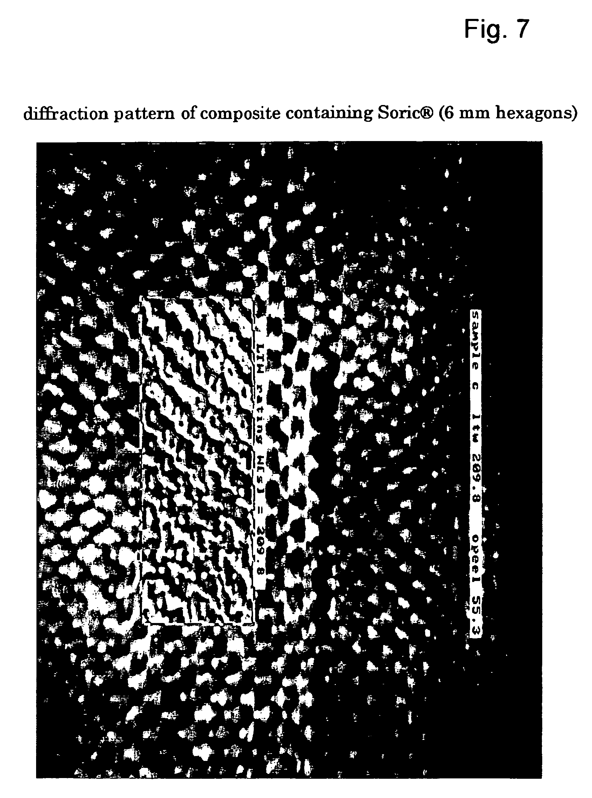

The orange peel was found to be 55.3. The graph representing the composite as observed via the D-SIGHT system is shown in figure 7.

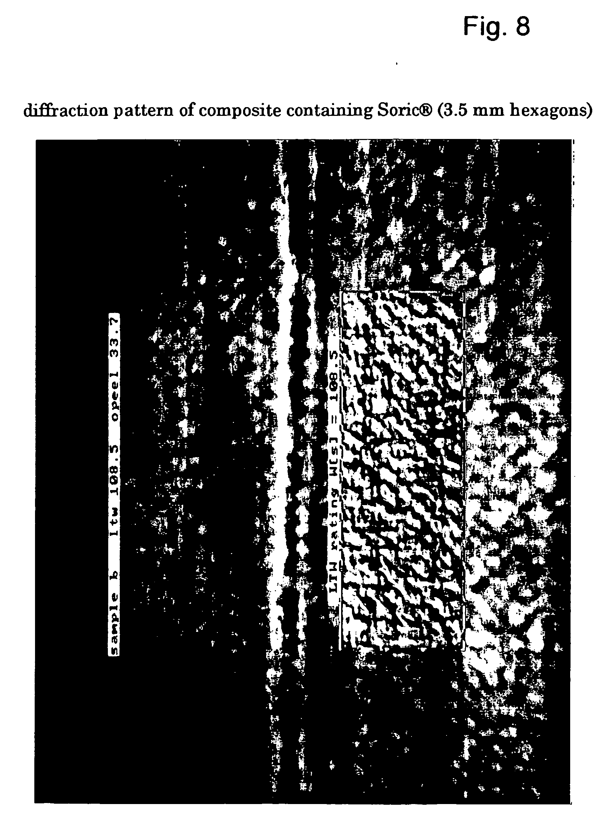

A second comparison example was performed in the same way, but with a Soric® core material having hexagons with a diameter of about 3.5 mm and a permeability of about 5 x $10^{-9}$ $m^2$. The orange peel was found to be 33.7. A graph representing the composite as observed via the D-SIGHT system is shown in Figure 8.

A third comparison example was performed in the same way, but now with a full glass laminate (three layers of the same glass fleece). The orange peel was found to be 24.9 (not shown in Figures).

*Manufacture of the core material*

A web was prepared consisting of 80 wt % polyester fibres and 20 wt % binder (acrylate).

A binder-microsphere mixture was made by mixing 5 kg of expandible microspheres (Expancel™, AKZO-NOBEL into 95 kg of acrylate dispersion. The solids content was about 52 wt %.

The binder-microsphere mixture was applied to the web by rotary screen printing, wherein the mixture was pressed into the web. The screen contained round irregularly distributed holes with an approximate diameter of about 0.6 mm, in a density of about 40 holes per $cm^2$.

After printing the web was dried at about 110 °C and subsequently expanded to a thickness of about 2 mm at a temperature of 200 °C. Simultaneously the web was cured.

*Example 1*

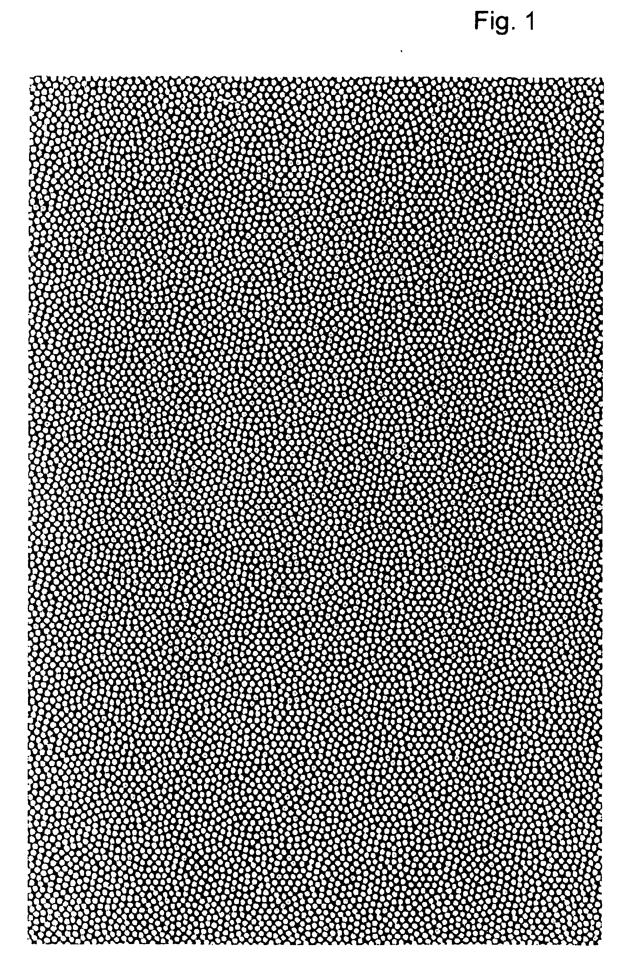

A core material with an irregular pattern as shown in Figure 1 wherein the members had an average diameter of approximately 1 mm, with a permeability of about 1.5 x $10^{-9}m^2$ was provided with the glass mats, as indicated above. The laminate was impregnated according to the same procedure as described in the comparison example.

Figure 5 shows the appearance of the composite (marked as "improved core material").

Figure 5 clearly demonstrates that the appearance of the core material according to the invention yields in a composite of which the surface has a much smoother appearance, resulting in a higher visual appreciation.

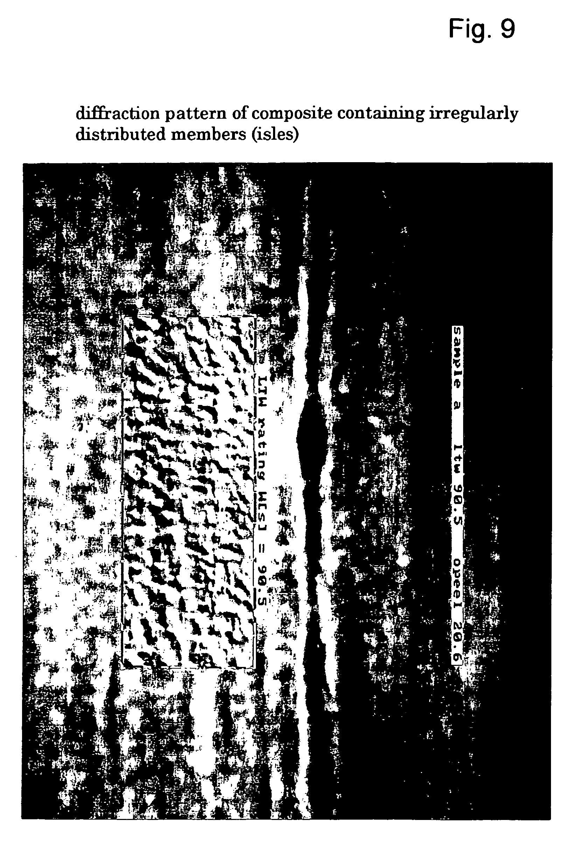

A graph representing the composite as observed via the D-SIGHT system is shown in figure 9. The orange peel was found to be 20.6.

*Example 2*

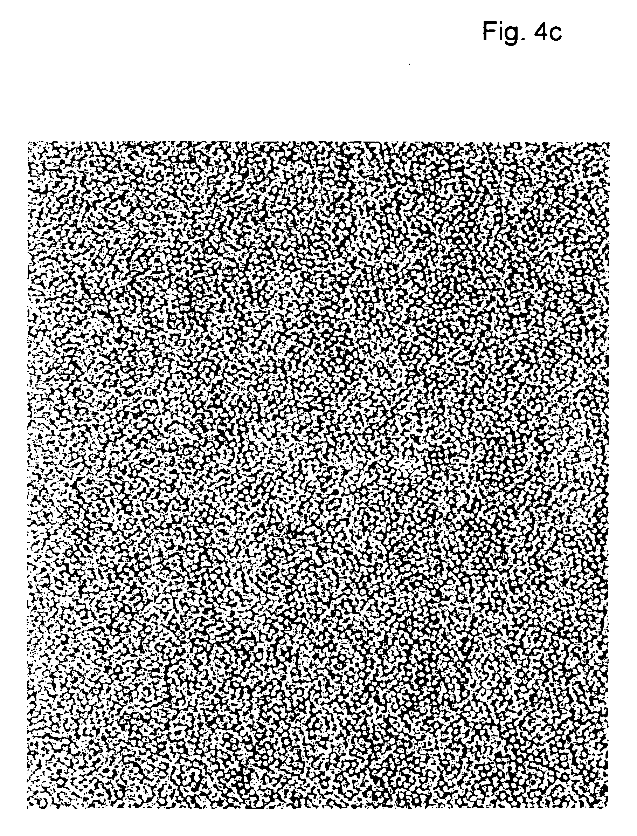

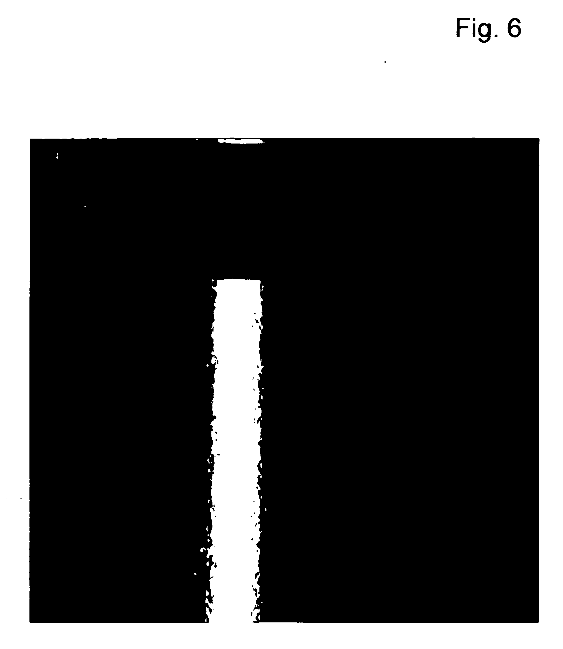

Figure 6 shows another composite according to the invention, made with a core material as shown in figure 4c, which also shows a very uniform appearance.

**Claims**

1.  A core material, suitable for use in a closed mould system, spray up application and/or hand lay up application, said core material being drapable, which core material is based on at least one fibrous web containing a foam-structure within the web, said foam-structure being formed of a plurality of members, which members are separated from each other by channels that are permeable to resin, **characterized in that** the members have an average diameter - as defined by the diameter of the enveloping circle, in the plane of the material - of less than 1.5 mm and wherein the channels have an average diameter of less than 0.75 mm.

2.  A core material according to claim 1, wherein said members are irregularly distributed within or upon the web, *viz.* wherein the pattern repeat in at least one direction of the x-direction and the y-direction is at least 0.5 cm.

3.  A core material according to claim 2, wherein at least the majority of the members have a diameter, as determined by the enveloping circle surrounding the member, in the plane of the material of less than 3 mm, preferably of less than 2.5 mm.

4.  A core material according to claim 2 or 3, wherein at least the majority of the channels have an average diameter of less than 1 mm.

5.  A core material according to any of the preceding claims, wherein the channels have an average diameter of 0.3-0.5 mm.

6.  A core material according to any of the preceding claims, wherein the members have an average diameter of 0.2-1 mm.

7.  A core material according to any of the preceding claims, wherein the permeability in the plane of the material for resin is at least $1 \times 10^{-9}$ m$^2$.

8.  A core material according to any of the preceding claims, wherein the members are randomly distributed within or upon the web.

9.  A core material according to any of the preceding claims, wherein the core material contains a plurality of differently shaped members.

10. A core material according to any of the preceding claims, wherein the free volume of the web is 40-80 % by volume, preferably 60 to 70 % by volume.

11. A core material according to any of the preceding claims, wherein the cross-sections parallel to the plane of the material of at least the majority of the members are selected from the group consisting of circular, ellipsoidal and polygonal cross-sections.

12. A core material according to any of the preceding claims wherein at least part of the members contain micro-spheres.

13. A core material according to any of the preceding claims, wherein the fibres of the web are selected from the group consisting natural fibres, glass fibres, metal fibres, ceramic fibres, synthetic fibres and combinations thereof.

14. A core material according to any of the preceding claims, having a compression resistance at 1 bar of at least 30 %, preferably at least 60 %, more preferably at least 70 %.

15. A laminate at least consisting of a core material according to any of the preceding claims, laminated with at least one fibrous fleece.

16. A laminate according to claim 15, wherein the laminate has a total thickness of 1 to 10 mm, preferably of 2 to 5 mm.

17. A laminate according to claim 15 or 16, wherein at least one fibrous fleece is selected from the group consisting of at least one type of fibre selected from the group consisting of glass fibres, carbon fibres and polyaramide fibres.

18. A laminate according to any of the claims 15-17 wherein the at least one fibrous fleece is glued or stitched to the core material.

19. A process for preparing a shaped article, said process comprising placing a core material according to any of the claims 1-14 optionally in combination with one or more other non-woven fleeces, or a laminate according to any of the claims 15-18 in a closed mould, introducing a liquid resin into the mould and curing the resin to produce the article.

20. Process according to claim 19, wherein the resin is a polyester resin, a phenylester resin, an epoxy resin, a polyurethane resin, a melamine-formaldehyde resin or a phenol resin.

21. A shaped article obtainable by a method according to any of the claims 19 or 20.

22. A shaped article, based upon a core material according to any of the claims 1-14 or a laminate according to any of the claims 15-17.

23. A shaped article according to claim 22, having a diffraction index as represented by its orange peel value of less than 30, preferably of less than 25, more preferably of 10-20.

24. Process for producing a core material according to any of the claims 1-14, said process comprising introducing a foamed or foam generating material into a fibrous web using at least one binder material and setting a foam in the web by curing the binder material.

25. Process according to claim 24, wherein the foamed or foam generating material is introduced into the web by rotary screen printing.

**Patentansprüche**

1. Kernmaterial, geeignet zur Verwendung in einem geschlossenen Formsystem, zur Aufspritzanwendung und / oder Handauflegeanwendung, wobei das Kernmaterial drapierfähig ist und auf mindestens einer Faserbahn mit einer Schaumstoffstruktur innerhalb der Bahn basiert, wobei das Schaumstoffgefüge aus einer Vielzahl von Gliedern gebildet wird, die durch Kanäle, die für Harz durchlässig sind, voneinander getrennt sind, **dadurch gekennzeichnet, dass** die Glieder einen durchschnittlichen Durchmesser - definiert durch den Durchmesser des Hüllkreises in der Materialebene - von weniger als 1,5 mm haben, und die Kanäle einen durchschnittlichen Durchmesser von weniger als 0,75 mm haben.

2. Kernmaterial nach Anspruch 1, wobei die Glieder unregelmäßig innerhalb oder auf der Bahn verteilt sind, wobei nämlich der Musterrapport in der x- und/oder der y-Richtung mindestens 0,5 cm beträgt.

3. Kernmaterial nach Anspruch 2, wobei mindestens die Mehrheit der Glieder einen durch den das Glied umgebenden Hüllkreis bestimmten Durchmesser in der Materialebene von weniger als 3 mm, vorzugsweise von weniger als 2,5 mm, hat.

4. Kernmaterial nach Anspruch 2 oder 3, wobei mindestens die Mehrheit der Kanäle einen durchschnittlichen Durchmesser von weniger als 1 mm hat.

5. Kernmaterial nach einem der vorhergehenden Ansprüche, wobei die Kanäle einen durchschnittlichen Durchmesser von 0,3 - 0,5 mm haben.

6. Kernmaterial nach einem der vorhergehenden Ansprüche, wobei die Glieder einen durchschnittlichen Durchmesser von 0,2 - 1 mm haben.

7. Kernmaterial nach einem der vorhergehenden Ansprüche, wobei die Durchlässigkeit in der Materialebene für Harz mindestens $1 \times 10^{-9}$ m$^2$ beträgt.

8. Kernmaterial nach einem der vorhergehenden Ansprüche, wobei die Glieder zufällig innerhalb oder auf der Bahn verteilt sind.

9. Kernmaterial nach einem der vorhergehenden Ansprüche, wobei das Kernmaterial eine Vielzahl von unterschiedlich geformten Gliedern enthält.

10. Kernmaterial nach einem der vorhergehenden Ansprüche, wobei das freie Volumen der Bahn 40 - 80 Volumenprozent, vorzugsweise 60 bis 70 Volumenprozent beträgt.

11. Kernmaterial nach einem der vorhergehenden Ansprüche, wobei die Querschnitte parallel zur Materialebene von mindestens der Mehrheit der Glieder aus der Gruppe ausgewählt werden, die kreisförmige, ellipsoide und polygonale Querschnitte umfasst.

12. Kernmaterial nach einem der vorhergehenden Ansprüche, wobei mindestens ein Teil der Glieder Mikrokugeln enthält.

13. Kernmaterial nach einem der vorhergehenden Ansprüche, wobei die Fasern der Bahn aus der Gruppe ausgewählt werden, die Naturfasern, Glasfasern, Metallfasern, Keramikfasern, Synthesefasern und Kombinationen daraus umfasst.

14. Kernmaterial nach einem der vorhergehenden Ansprüche mit einer Kompressionsbeständigkeit bei 1 bar von mindestens 30 %, vorzugsweise mindestens 60 %, besser mindestens 70 %.

15. Laminat, das mindestens ein Kernmaterial nach einem der vorhergehenden Ansprüche, laminiert mit mindestens einem Faservlies aufweist.

16. Laminat nach Anspruch 15, wobei das Laminat eine Gesamtdicke von 1 bis 10 mm, vorzugsweise von 2 bis 5 mm, hat.

17. Laminat nach Anspruch 15 oder 16, wobei mindestens ein Faservlies aus der Gruppe ausgewählt wird, die mindestens eine Faserart aufweist, die aus der Gruppe ausgewählt wird, die Glasfasern, Kohlenstofffasern und Polyaramidfasern umfasst.

18. Laminat nach einem der Ansprüche 15 - 17, wobei das mindestens eine Faservlies an das Kernmaterial geklebt oder geheftet wird.

19. Verfahren zum Fertigen eines geformten Artikels, wobei das Verfahren das Platzieren eines Kernmaterials nach einem der Ansprüche 1 - 14 optional in Kombination mit einem oder mehreren anderen Non-Woven-Vliesen oder eines Laminats nach einem der Ansprüche 15 - 18 in eine geschlossene Form, das Einführen eines flüssigen Harzes in die Form und das Aushärten des Harzes umfasst, um den Artikel zu produzieren.

20. Verfahren nach Anspruch 19, wobei das Harz ein Polyesterharz, ein Phenylesterharz, ein Epoxidharz, ein Polyurethanharz, ein Melamin-Formaldehyd-Harz oder ein Phenolharz ist.

21. Geformter Artikel, der durch ein Verfahren nach einem der Ansprüche 19 oder 20 erzielt werden kann.

22. Geformter Artikel, der auf einem Kernmaterial nach einem der Ansprüche 1 - 14 oder einem Laminat nach einem der Ansprüche 15 - 17 basiert.

23. Geformter Artikel nach Anspruch 22 mit einem durch seinen Orangenschalenwert dargestellten Beugungsindex von weniger als 30, vorzugsweise weniger als 25, besser von 10-20.

24. Verfahren zum Produzieren eines Kernmaterials nach einem der Ansprüche 1-14, wobei das Verfahren das Einführen eines geschäumten oder Schaum erzeugenden Materials in eine Faserbahn unter Verwendung mindestens eines Bindemittelmaterials und das Fixieren eines Schaumstoffs in der Bahn durch Aushärten des Bindemittelmaterials umfasst.

25. Verfahren nach Anspruch 24, wobei das geschäumte oder Schaum erzeugende Material durch Rotationsfilmdruck in die Bahn eingeführt wird.

**Revendications**

1. Matériau pour noyaux approprié pour utilisation dans un système de moule fermé, une application de moulage au pistolet et/ou une application de moulage à la main, ledit matériau pour noyaux pouvant être drapé, lequel matériau pour noyaux est basé sur au moins une bande fibreuse contenant une structure en mousse dans la bande, ladite structure en mousse étant formée d'une pluralité d'organes, lesquels organes sont séparés les uns des autres par des canaux qui sont perméables à de la résine, **caractérisé en ce que** les organes ont un diamètre moyen - tel que défini par le diamètre du cercle enveloppant, dans le plan du matériau - de moins que 1,5 mm et dans lequel les canaux ont un diamètre moyen de moins que 0,75 mm.

2. Matériau pour noyaux selon la revendication 1, dans lequel lesdits organes sont distribués de manière irrégulière dans ou sur la bande, c.-à-d., dans lequel la répétition de motif dans au moins une direction de la direction-x et la direction-y est au moins 0,5 cm.

3. Matériau pour noyaux selon la revendication 2, dans lequel au moins la majorité des organes ont un diamètre, tel que déterminé par le cercle enveloppant entourant l'organe, dans le plan du matériau de moins que 3 mm, préférablement de moins que 2,5 mm.

4. Matériau pour noyaux selon la revendication 2 ou 3, dans lequel au moins la majorité des canaux ont un diamètre moyen de moins que 1 mm.

5. Matériau pour noyaux selon l'une quelconque des revendications précédentes, dans lequel les canaux ont un diamètre moyen de 0,3-0,5 mm.

6. Matériau pour noyaux selon l'une quelconque des revendications précédentes, dans lequel les organes ont un diamètre moyen de 0,2-1 mm.

7. Matériau pour noyaux selon l'une quelconque des revendications précédentes, dans lequel la perméabilité pour de la résine dans le plan du matériau est au moins de $1 \times 10^{-9}$ m$^2$.

8. Matériau pour noyaux selon l'une quelconque des revendications précédentes, dans lequel les organes sont distribués de manière aléatoire dans ou sur la bande.

9. Matériau pour noyaux selon l'une quelconque des revendications précédentes, dans lequel le matériau pour noyaux contient une pluralité d'organes formés différemment.

10. Matériau pour noyaux selon l'une quelconque des revendications précédentes, dans lequel le volume libre de la bande est 40-80% en volume, préférablement 60 à 70% en volume.

11. Matériau pour noyaux selon l'une quelconque des revendications précédentes, dans lequel les sections transversales parallèles au plan du matériau d'au moins la majorité des organes sont sélectionnées du groupe consistant en des sections transversales circulaires, ellipsoïdales et polygonales.

12. Matériau pour noyaux selon l'une quelconque des revendications précédentes dans lequel au moins une partie des organes contient des microsphères.

13. Matériau pour noyaux selon l'une quelconque des revendications précédentes, dans lequel les fibres de la bande sont sélectionnées du groupe consistant en des fibres naturelles, des fibres de verre, des fibres métalliques, des fibres céramiques, des fibres synthétiques et des combinaisons de celles-ci.

14. Matériau pour noyaux selon l'une quelconque des revendications précédentes, ayant une résistance à la compression à 1 bar d'au moins 30%, préférablement d'au moins 60%, plus préférablement d'au moins de 70%.

15. Stratifié au moins consistant en un matériau pour noyaux selon l'une quelconque des revendications précédentes, stratifié avec au moins un molleton fibreux.

16. Stratifié selon la revendication 15, dans lequel le stratifié a une épaisseur totale de 1 à 10 mm, préférablement de 2 à 5 mm.

17. Stratifié selon la revendication 15 ou 16, dans lequel au moins un molleton fibreux est sélectionné du groupe consistant en au moins un type de fibres sélectionné à partir du groupe consistant en des fibres de verre, des fibres de carbone et des fibres polyaramides.

18. Stratifié selon l'une quelconque des revendications de 15-17 dans lequel la au moins un molleton fibreux est collé ou cousu au matériau pour noyaux.

19. Procédé pour préparer un article formé, ledit procédé comprenant la mise en place d'un matériau pour noyaux selon l'une quelconque des revendications 1-14 optionnellement en combinaison avec un ou plusieurs molletons non-tissés, ou un stratifié selon l'une quelconque des revendications 15-18 dans un moule fermé, l'introduction d'une résine liquide dans le moule et le séchage de la résine pour produire l'article.

20. Procédé selon la revendication 19, dans lequel la résine est une résine polystère, une résine phénylester, une résine époxy, une résine polyuréthanne, une résine mélamine-formaldéhyde ou une résine phénolique.

21. Article formé qui peut être obtenu par un procédé selon l'une quelconque des revendications 19 ou 20.

22. Article formé, basé sur un matériau pour noyaux selon l'une quelconque des revendications 1-14 ou un stratifié selon l'une quelconque des revendications 15-17.

23. Article formé selon la revendication 22, ayant un index de diffraction tel que représenté par sa valeur de peau d'orange de moins que 30, préférablement de moins que 25, plus préférablement de 10-20.

24. Procédé pour produire un matériau pour noyaux selon l'une quelconque des revendications 1-14, ledit processus comprenant l'introduction d'un matériau-mousse ou générant de la mousse dans une bande fibreuse en utilisant au moins un matériau liant et l'établissement d'une mousse dans la bande en séchant le matériau liant.

25. Procédé selon la revendication 24, dans lequel le matériau-mousse ou générant de la mousse est introduit dans la bande par impression au cadre rotatif.

Fig. 1

Fig. 2

Fig. 3

## Fig. 4a

## Fig. 4b

Fig. 4c

**Fig. 5**

Fig. 6

Fig. 7

diffraction pattern of composite containing Soric® (6 mm hexagons)

# Fig. 8

diffraction pattern of composite containing Soric® (3.5 mm hexagons)

Fig. 9

diffraction pattern of composite containing irregularly
distributed members (isles)